# EUROPEAN PATENT SPECIFICATION

(11) **EP 2 128 839 B1**
(45) Date of publication and mention of the grant of the patent: **25.08.2010**
(21) Application number: 09170601.0
(22) Date of filing: 30.05.2006
(51) Int. Cl.: G08G 1/09

(54) **Providing traffic information including average travel speed for a link and generation time**
Bereitstellung von Verkehrsinformationen einschließlich durchschnittlicher Reisegeschwindigkeit für ein Straßensegment und Erzeugungszeit
Fourniture d'informations de trafic incluant la vitesse moyenne de voyage pour un lien et le temps de génération

(30) Priority: 08.07.2005 US 697386 P; 13.07.2005 US 698481 P; 16.09.2005 KR 20050086887; 19.01.2006 US 759963 P
(43) Date of publication of application: 02.12.2009
(62) Divisional of application: 06747474.2
(73) Proprietor: LG Electronics Inc., Seoul 150-721 (KR)
(72) Inventor: Kim, Young In, 151-052 Seoul (KR); Jung, Mun Ho, 463-753, Gyeonggi-do (KR)
(74) Representative: Cabinet Plasseraud

(56) References cited:
- EP-A- 0 725 500
- EP-A- 1 041 755
- EP-A- 1 445 750
- US-B1- 6 633 808

## Description

### 1. TECHNICAL FIELD

This disclosure relates to providing traffic information including traffic data for a link and using the same.

### 2. BACKGROUND ART

With the advancement in digital signal processing and communication technologies, radio and TV broadcasts are being digitalized. Digital broadcasting enables provision of various information (e.g., news, stock prices, weather, traffic information, etc.) as well as audio and video content.

One such use for digital broadcasts is to satisfy an existing demand for traffic information. Proposals that involve the use of digital broadcasts for this purpose contemplate the use of standardized formatting of traffic information to be broadcast. This approach may be used to enable the use of traffic information receiving terminals made by different manufacturers, which each could be configured to detect and interpret traffic information broadcast in the same way.

Patent document EP 1 445 750 A2 discloses a method for transmitting traffic information with the help of conventional messages and extension messages comprising a data container for additional information which is not contained in the conventional message.

Patent document EP 1 041 755 A2 discloses a method for transmitting traffic information by sending a message including a time stamp corresponding to an event. The message is stored in a buffer along with other messages generated for same event. The message is used to measure the duration of the event.

### 3. DISCLOSURE OF INVENTION

In a first aspect, the present invention further proposes a method of processing traffic data comprising steps of receiving and of decoding traffic data according to claim 1.

In a second aspect, the present invention proposes an apparatus for processing traffic data comprising a receiving unit and a decoding unit according to claim 5.

In a third aspect, the invention proposes a method of processing traffic data comprising steps of encoding and of transmitting traffic data according to claim 10.

Finally, in a fourth aspect, the invention still further proposes an apparatus for processing traffic data comprising an encoding unit and a transmitting unit according to claim 14.

### 4. GENERAL ASPECTS OF THE INVENTION

General aspects of a method for identifying traffic information are presented below. The method includes receiving traffic data including a first identifier, an amount of time currently taken to traverse a particular link, and information corresponding to a location associated with the particular link. The first identifier enables a determination of a type of the information that is included within the received traffic data. The method also includes determining a type of information included within the received traffic data based on the first identifier and determining current travel time information based on the information included in the received traffic data only if the first identifier enables a determination that the received traffic data includes an amount of time. The method further includes determining location information based on the information that is included in the received traffic data corresponding to the location associated with the particular link and identifying traffic information based on the determined current travel time information and the determined location information.

Implementations may include one or more additional features. For instance, determining current travel time information may include accessing received data corresponding to, among other items, results of measurements made with respect to traffic previously traversing the link, and computing an amount of travel time based on the received data. Determining current travel time information may involve accessing information provided within the received traffic data and recognizing that data as the amount of travel time.

Themethodmay also include receiving information corresponding to a message management structure including information corresponding to a generation time of information reflected in the traffic data. The generation time included within the received message management structure may relate to a plurality of message component structures that correspond to more than one of a predicted or current traffic tendency, a predicted or current amount of traffic, a predicted or current speed, or a predicted or current time to traverse a particular link. Each message component structure may further include an identifier specific to the type of information and the first identifier may be an identifier, in a message component structure, specific to the current travel time amount for the particular link.

Also, in the method, the current travel time information and the location information may be determined in a single step. The location information may be determined before the current travel time information is determined. Receiving traffic data may include decoding the traffic data such that the received traffic data is decoded traffic data. Receiving information corresponding to a current travel time amount may include receiving a value associated with a text description of an amount of travel time, and determining, with the received value, the text description. Receiving information corresponding to a current of travel time amount may include receiving a current amount of travel time for the link including a text descriptor. The amount of time currently taken to traverse a particular link may reflect the current travel time amount.

Further, in the method, the amount of time currently taken to traverse the link may be reflected in a number of seconds. The amount of time currently taken to traverse the link may be reflected in a unit of time that is smaller than a second. The amount of time may be reflected in one or more bytes, each byte including a first portion of the byte which determines a value in terms of minutes and a second portion of the byte, consisting of five or less bits, which determines a number of tens of seconds. Receiving an amount of time may include receiving a flag value that determines whether associated data is in terms of either a first unit or a second unit. The first unit may be minutes and the second unit may be seconds. Receiving an amount of time may include receiving a flag value that determines whether associated data will include one or more additional packets of information. The flag value may indicate that the associated data will be delivered with a single additional byte.

General aspects of another method for identifying traffic information are presented in what follows. The method includes extracting a traffic information message including message segments and extracting a first component including status information from the extracted traffic information message. The method also includes extracting, from the first component, congestion information for a link from the status information and extracting a second component including status information from the extracted traffic information message. The method further includes extracting, from the second component, speed information for a link from the status information and extracting a third component including status information from the extracted traffic information message. Also, the method further includes extracting, from the third component, travel time information for a link from the status information and identifying, based on the extracted information, congestion information, speed information, and travel time information for the link.

General aspects of an apparatus for identifying traffic information shall now be presented. The apparatus includes an interface configured to receive traffic data including a first identifier, information corresponding to an amount of time currently taken to traverse a particular link, and information corresponding to a location associated with the particular link. The first identifier enables a determination of a type of the information that is included within the received traffic data. The apparatus includes a processor configured to determine a type of information included within the received traffic data based on the first identifier and determining current travel time information based on the information included in the received traffic data only if the first identifier enables a determination that the received traffic data includes an amount of time. The processor is also configured to determine whether received traffic data includes an amount of time based on the information that is included in the received traffic data corresponding to the location corresponding to the particular link and identify traffic information based on the determined current travel time information and the determined location information.

Implementations may include one or more additional features. For instance, in the apparatus, the processor may be configured to receive traffic data including information corresponding to a version number of information reflected in the traffic data. The version number may be associated with a specific syntax of the data where any one of multiple syntaxes may be used.

Also, in the apparatus, the processor may be configured to receive information corresponding to a message management structure including information corresponding to a generation time of information reflected in the traffic data. The processor may be configured to receive information corresponding to a data length of the received data.

Further, in the apparatus, the processor may be further configured to determine the amount of travel time for a particular link only if the first identifier enables a determination that the traffic data relates to a current travel time for a particular link

The details of one or more implementations are set forth in the accompanying drawings and the description below. Other features will be apparent from the description and drawings, and from the claims.

### 5. BRIEF DESCRIPTION OF DRAWINGS

Fig. 1 illustrates a schematic diagram of a network through which traffic information is provided;
Fig. 2 illustrates a format of traffic information transmitted wirelessly;
Fig. 3 illustrates a structure of congestion and travel time information included in a CTT event container;
Figs. 4a through 4c illustrate average speed on a link, travel time for the link, and syntax for degree of congestion included in the status component of the CTT event container of Fig. 3;
Figs. 5a through 5c illustrate structures of a status component delivering average speed on a link;
Figs. 6a through 6e illustrate information structures for travel time for a link;
Fig. 7 illustrates a block diagram of a navigation terminal that receives traffic information transmitted from a server;
Figs. 8a and 8b illustrate examples of graphical user interfaces configured to display average speed on a link;
Fig. 9a illustrates an example of a graphical user interface configured to display average speeds on several links with a resolution that is more fine than, e.g., 1.8 km/h; and
Fig. 9b illustrates an example of a graphical user interface configured to display travel times for links.

### 6. MODES FOR CARRYING OUT THE INVENTION

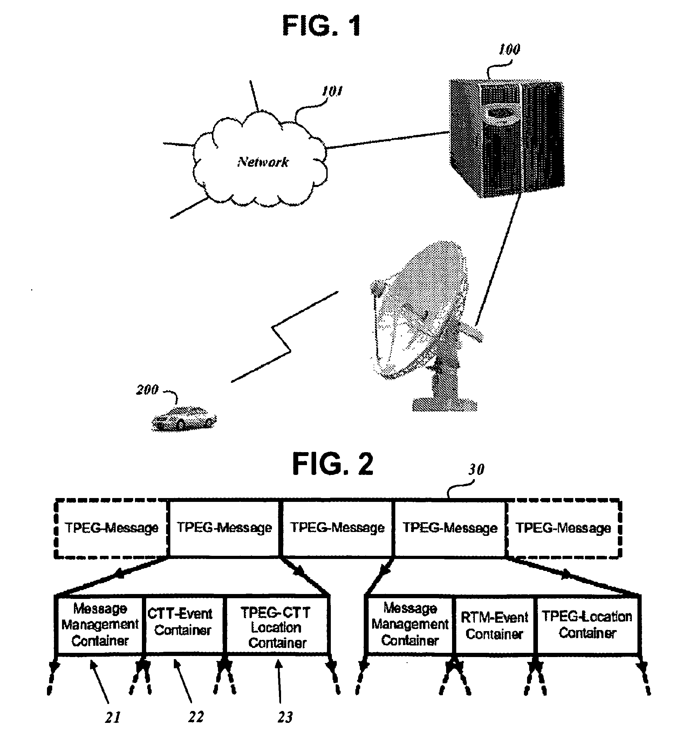

FIG. 1 is a schematic diagram of a network through which traffic information is provided. A traffic information providing server 100 in a broadcast station may transmit traffic information collected from various sources (e.g., operator input, or information received from another server or probe cars through a network 101) wirelessly so that a traffic information receiving terminal (e.g., navigation system installed in a car 200) may receive the traffic information.

As shown in FIG. 2, the traffic information wirelessly transmitted from the traffic information providing server 100 may be a sequence of TPEG-CTT (transport protocol expert group-congestion and travel-time Information) messages. A message segment of the sequence, i.e., a TPEG-CTT message may include a message management container 21, a CTT event container (or Application Event Container) 22, and TPEG-CTT location container 23. The TPEG-CTT message may also include different type of containers other than, less than, or in addition to the CTT event container as in the TPEG-CTT message 30.

The message management container 21 may be used for managing date and time information. The time information may include message generation time (e.g., a chronological time indication) . The message generation time may be included in every TPEG-CTT message when the corresponding message is transmitted. The CTT event container 22 may include congestion and travel time status and predicted congestion and travel time status of links, i.e., road segments. The congestion and travel time status may include average link speed, link travel time, link delay, or congestion type, etc.

The TPEG-CTT location container 23 may employ various location reference processes. For example, a location reference process using a coordinate system or a location reference process using pre-promised links may be used. When a coordinate system is used, the coordinates (latitudes and longitudes) of the start and end positions of a link for which the TPEG-CTT message is created, may be transmitted. When a reference process using pre-promised links is used, a unique identification for a specific link on a receiving device may be transmitted. For example, a receiving device may include a locally stored network of links, wherein each link may be identified by a unique identifier. A link may refer to a road segment which starts and ends at junctions and has no junction in between. The coordinate systemmaybe the WGS 84 model. Atext formatted name of the link may be transmitted.

In various implementations, a CTT event container and a TPEG-CTT location container are composed of one or more CTT components 201.

A CTT event container 22 may be composed of one component or a plurality of CTT components. In various implementations, CTT components including an ID of 80h (notation 'h' means hexadecimal) or 84h includes one or more status components including basic traffic information such as the average link speed, link travel time, link delay, or congestion type. In the description, specific IDs are described as assignments to structures associated with specific information. The actual value of an assigned ID (e.g., 80h) is exemplary, and different implementations may assign different values for specific associations or circumstances.

In various implementations, CTT components including an ID of 81h include one or more status components including predicted CTT status. The predicted CTT status may include predicted average link speed, predicted link travel time, or congestion acceleration tendency. The congestion acceleration tendency may include information indicative of the tendency of congestion status. The congestion acceleration tendency will be described as a type of prediction information as the congestion status in the near future may be predicted from it.

In various implementations, the TPEG-CTT message may comprise CTT components to deliver additional information of traffic information. An identifier 8Ah may be assigned to the CTT component carrying additional information, and a language code that is indicative of language used for the additional information may also be included in the CTT component.

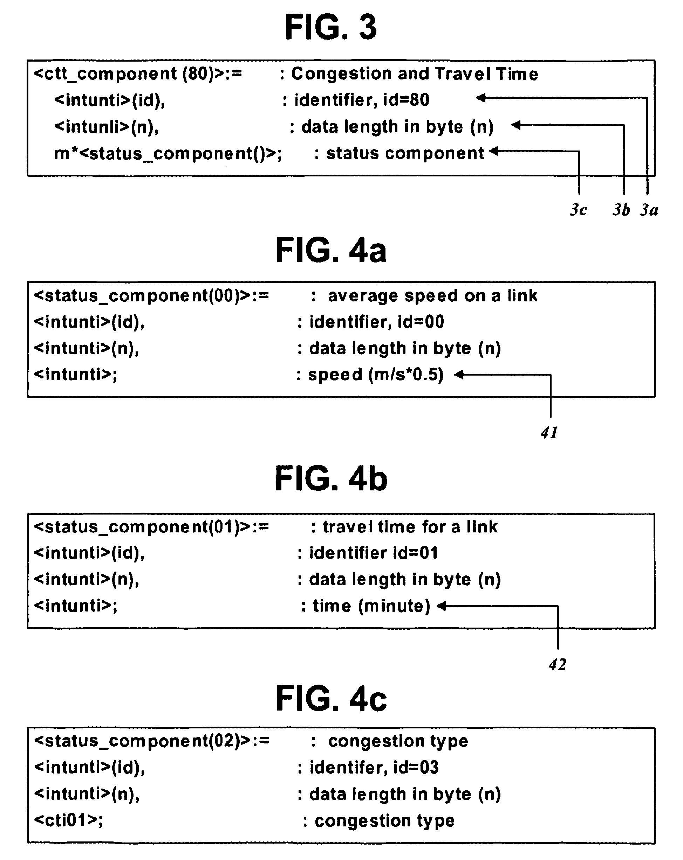

Fig. 3 illustrates a syntax, according to various implementations, of a structure of a congestion and travel time information component (hereinafter, referred to as CTT component) belonging to a CTT event container (e.g., at reference numeral 22 for Fig. 2) . The Fig. 3 CTT component has an ID of '0x80' 3a, includes m status components 3c, and has a field expressed in byte 3b indicating the length of the whole data of the status components included therein.

Status components may, for example, use 8 bits to transfer average speed on a link, travel time for a link, and/or information about degree of congestion in a format illustrated in Figs. 4a through 4c. In one implementation, an ID of '00' is assigned to average speed on a link; an ID of '01' is assigned to travel time for a link; and an ID of '03' is assigned to degree of congestion.

A numeric value expressed in units such as, for example, of 0.5 m/s (namely, 1.8 km/h) may be carried in the field 41 for average speed on a link ('intunti' denotes size of byte) and a numeric value expressed in units such as, for example, minutes is carried in the field for travel time for a link 42. Information about travel time for a link may be obtained by retrieving the link length from a link information (e.g., link length, link width, etc.) database constructed in the server 100 and dividing the link length by average speed on the corresponding link obtained from traffic information collected from various sources, being provided after further rounding off to the units of minute (e.g., a travel time exceeding 30 seconds is rounded off to one minute).

In one implementation, if average speed on a link is transmitted in the units of 0.5 m/s (1.8 km/h), the allowable range of the speed in 8-bit expression may amount to 0 ∼ 459 km/h. Since it may be unnecessary to express the average speed up to a very high value (e.g., beyond 200 km/h), it may be better to consider a very high speed (e.g., average speed higher than 200 km/h) to be resulting from drivers speeding in the corresponding link rather than current trafficcondition. Accordingly, from a view point of providing traffic congestion information, it may be useless to provide information indicating up to a very high speed.

On the other hand, in the case of traffic congestion, even 1 km/h difference in the average speed may be an important factor for a driver to choose a particular route. In this respect, a resolution of 1.8 km/h cannot discriminate 1 km/h difference in the average speed. Therefore, when average speed on a link becomes low, the average speed information expressed in units of 0.5 m/s (= 1.8 km/h) may not satisfy drivers requirement on the degree of resolution.

Similarly, if travel time for a link is provided in units of minute, round-off error may become large when the length of the link is short. For example, if the link length is 500 meters and average speed on the link is 20 m/s (= 72 km/h), travel time for the link will become 25 seconds; if the link length is 1000 meters and average speed on the link is 20 m/s, travel time for the link will become 50 seconds; for another example, if the link length is 2900 meters and average speed on the link is 20 m/s, travel time for the link will be 145 seconds. In these cases, the travel time for the link delivered to the status component corresponds to 0, 1, and 2 minutes, respectively; therefore, the difference between actual travel time and the travel time provided by traffic information amounts to 25, 10, and 25 seconds. These errors may become more prominent in links of short lengths.

Therefore, in various implementations, as to the delivery of information about average speed on a link, the maximum speed is lower than may be introduced to improve resolution in low speed links. Likewise, as to the delivery of information about travel time for a link, information expressed in units of seconds may be permitted. an 8 bit representation may be employed for delivering information about travel time for a link expressed in units of seconds; however, additional bits may also be assigned to deliver the information expressed in units of second.

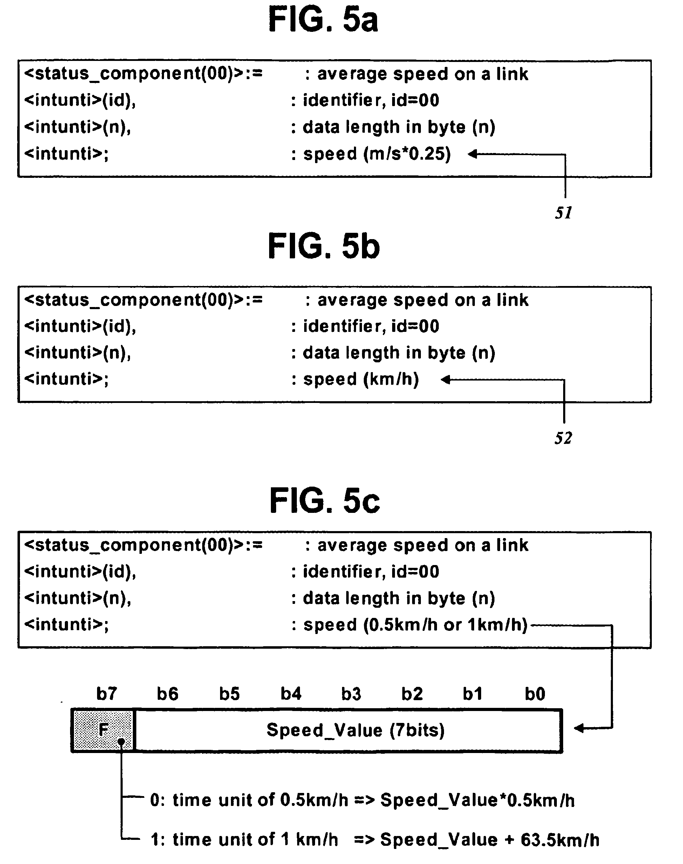

As shown in Fig. 5a, in one implementation, the following format for delivering information about average speed on a link may be employed: 0.25 m/s (= 0. 9 km/h). By using the speed unit, the maximum speed that an 8-bit field indicative of average speed 51 may represent becomes 229.5 km/h.

The unit of 0.25 m/s is only an arbitrary example; therefore, in order to increase the speed resolution in a link of slow speed, a much lower unit, for example, 0.2 m/s (the maximum allowable speed for representation is 183. 6 km/h) or 0.15 m/s (the maximum allowable speed for representation is 137.7 km/h) may be employed. Increasing speed resolution by lowering the speed unit is advantageous for the cases where traffic regulations restrict the maximum speed (e.g., to 110 km/h).

As shown in Fig. 5b, average speed on a link may also be provided in units of 1 km/h. According to this implementation, the allowable range that the field indicative of average speed 52 may represent becomes 0 ∼ 255 km/h and figures below a decimal point do not occur. Although the maximum speed allowable for representation is decreased in the implementation of Fig. 5b compared with the example of Fig. 4a (459 km/h → 255 km/h), the speed resolution is improved by 0.8 km/h (1.8 km/h → 1 km/h).

The speed resolution may play an important role depending on the magnitude of the average speed on the current link. As described earlier, when the average speed on a link is low, a driver may respond sensitively to a slight change of the average speed, whereas the driver may show lower sensitivity against a slight change of the average speed if the average speed on the link is high. Therefore, in various implementations , a variable speed unit may be employed in accordance with the magnitude of the average speed. Fig. 5c illustrates an example of a structure of the average speed field of a status component according to one implementation. The most significant bit (F) designates a speed unit on which the average speed represented by the remaining 7 bits (Speed_Value) is based. For example, if the most significant bit (F) is 0, it implies that the value carried by the remaining 7 bits (Speed_Value) corresponds to the average speed expressed in units of 0.5 km/h; when the most significant bit (F) is 1, the value carried by the remaining 7 bits (Speed_Value) corresponds to the average speed expressed in units of 1 km/h.

In the implementation of Fig. 5c, since the maximum speed that may be expressed in 0.5 km/h unit is 63.5 km/h (= 127*0.5 km/h), when the most significant bit (F) is 1, the average speed amounts to the sum of what the remaining 7 bits represent and 63.5 km/h. As to a high speed value, an integer value of 63 km/h may be added instead of 63.5 km/h. For example, if the average speed field is 1:0001100, the average speed to be delivered will be 759.5 km/h (= 12 km/h + 63.5 km/h) or 759 km/h (= 12 km/h + 63 km/h).

Specifying the speed resolution with the two different units of 0.5 km/h and 1 km/h in the implementation of Fig. 5c is only an example; a different resolution from the specified unit may be employed. Therefore, a variable resolution depending on the magnitude of the average speed on a link should be considered to fall within the scope , even though an employed speed resolution may be different from what is described in this disclosure.

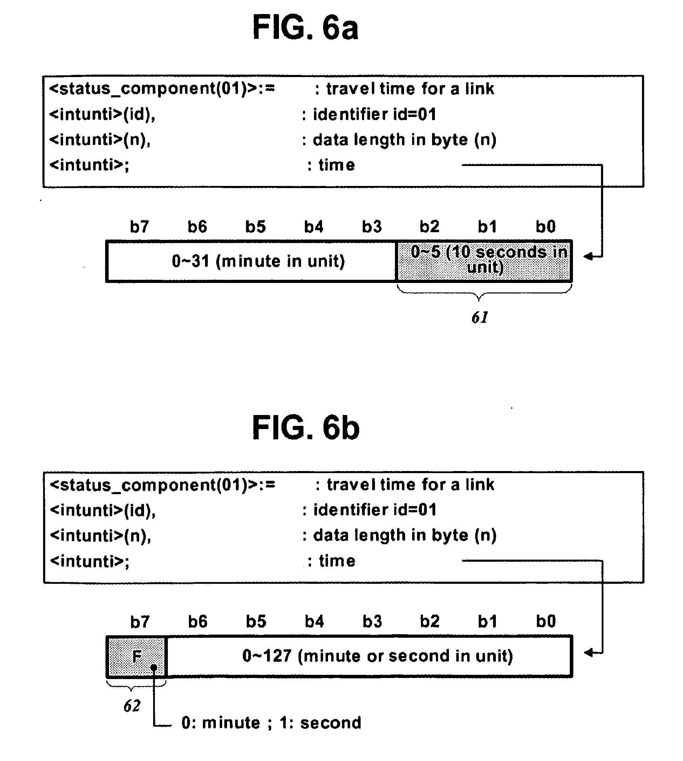

An implementation of a format delivering information about travel time for a link is illustrated in Figs. 6a through 6d.

In the implementation of Fig. 6a, the higher 5 bits of 8 bits are reserved for minutes and lower 3 bits 61 are reserved for seconds. Since the allowable range that the lower 3 bits can express is from 0 to 7, the lower 3 bits 61 records the value of tens of the element expressed in second from the travel time for a link. That is to say, from the three examples described earlier, since the travel time for the link is 25, 50, and 145 seconds (2 minutes and 25 seconds), the lower 3 bits 61 records 3 (which corresponds to 30---5 seconds are rounded off) , 5 (which corresponds to 50), and 3 (which corresponds to 30) ; the higher 5 bits records 0, 0, and 2, respectively. In the present implementation, respective errors become 5, 0, and 5 seconds and relative error magnitudes are reduced to 20% (= 5/25), 0% (= 0/10) , and 20% (= 5/25), being reduced to 13.3% on the average compared with the case expressed in minute.

In the implementation of Fig. 6b, the time unit for the 8 bit expression is varied as needed. More specifically, lower 7 bits are reserved to represent travel time for a link in units of minute or second; the most significant bit 62 is used as a flag to designate whether the content recorded in the 7 bits is measured in units of minute or second. When the content is expressed inminute, 0 is assigned, whereas 1 is assigned when the content is expressed in second. Since the travel time for the link is 25, 50, and 145 seconds from the previous three examples, 10011001 (flag = 1), 10110010 (flag = 1), and 00000010 (flag = 0) (= 2 minutes) or 11111111 (flag = 1) (= 127 seconds) are recorded in the 8 bits, respectively. In the present implementation, respective errors become 0, 0, and 25 seconds (or 18 seconds) and relative error magnitudes are 0%, 0%, and 100% (or 72%), being reduced to 33.3% (or 24%) on the average compared with the case expressed in minute.

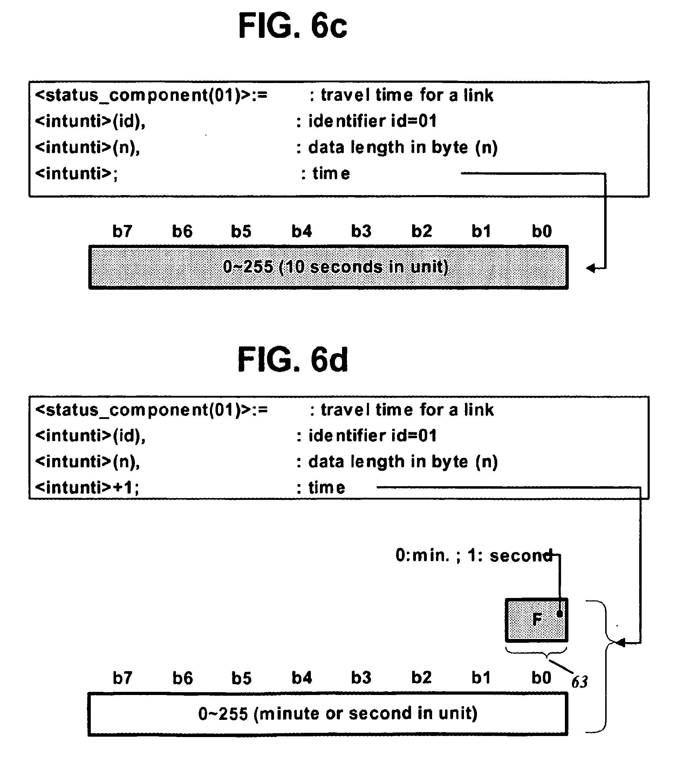

In the implementation of Fig. 6c, the entire 8 bits are used to record travel time for a link, the recording unit being less than 60 seconds and larger than 1 second (e.g., 10 seconds). Since the travel time for the link is 25, 50, and 145 seconds from the previous three examples, 3 (5 seconds are rounded off), 5, and 15 are each recorded in the 8 bits according to the implementation of Fig. 6c. In the present implementation, respective errors become 5, 0, and 5 seconds and relative error magnitudes are 20%, 0%, and 20%, being reduced to 13.3% on the average compared with the case expressed in minute. Although the present implementation shows identical results to those from the implementation of Fig. 6a, the maximum time allowable for expressing travel time for a link is 2550 seconds (4 minutes and 30 seconds), thereby being larger than 31 minutes and 50 seconds of the implementation of Fig. 6a.

Additional bits may be assigned through a mechanism such as that shown by Fig. 6d. Fig. 6d is an implementation where a flag of one bit denoting time unit is appended.

In the implementation of Fig. 6d, the entire 8 bits are reserved for travel time for a link and an additional one bit flag 63 (e.g., this flag is set to 0 when the time unit corresponds to minute, whereas it is 1 when the time unit is second) is so assigned as to specify whether the time recorded in the 8 bits is expressed in minute or second. Since the travel time for the link is 25, 50, and 145 seconds from the previous three examples, 1:8 bits (flag: data) according to the implementation of Fig. 6d holds 1:00011001, 1:00110010, and 1:10010001, respectively. The error from each case becomes 0 in the present implementation, the error rate being reduced by 100% compared with the case expressed in minute.

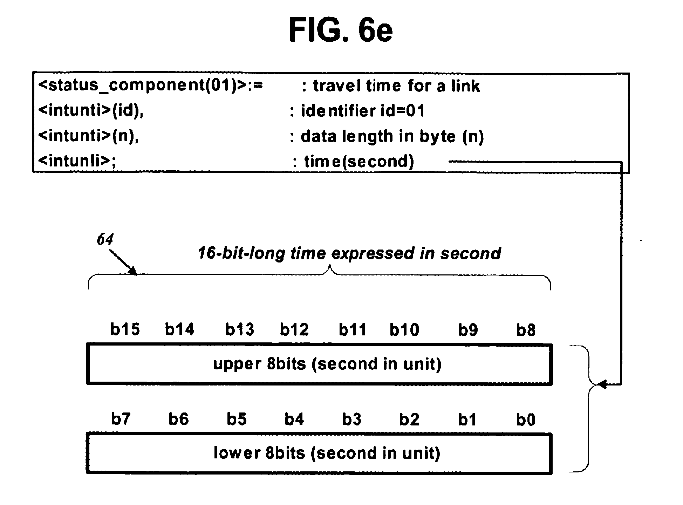

When the additional one bit does not make up 8 bits in such a way that effective information is carried in the other constituting 7 bits, the 7 bits may be wasted for the sake of simplicity for information processing. Therefore, when effective information is not included in the constituting 7 bits and thus delivered to the status component (ID 0x01), it may be useful to deliver the travel time for a link by 16 bits rather than to additionally deliver the one bit flag only, as shown in Fig. 6e ('intunti' in Fig. 6e denotes size of 16 bits). In the implementation of Fig. 6e, the entire 16 bits represent the travel time for the link 64 expressed wholly in second. In the implementation of Fig. 6e where the entire 16 bits are used to express travel time for a link, the maximum allowable time becomes 18 hours 12 minutes and 16 seconds. This representation capacity can accommodate travel time for a link for nearly all links without error.

The implementations of Figs. 6a through 6c, where travel time for a link is expressed with 8 bits, have improved features compared with the case where the 8 bits are used to express the travel time for the link in units of minute only. However, for the implementations of Figs. 6a and 6c, since the maximum allowable time for each case is 31 minutes and 50 seconds; and 42 minutes and 30 seconds, respectively, if a part of the link gets congested and travel time thus becomes elongated, a case where information delivery fails may happen due to the inability to represent the travel time for the link. For the implementation of Fig. 6b, a problem exists that as for the travel time for a link exceeding 127 seconds, an error happens identically to the case where the travel time for a link is delivered in units of minute. It may be particularly advantageous to employ the Fig. 6c-6e solutions when a larger range or a more precise range is required.

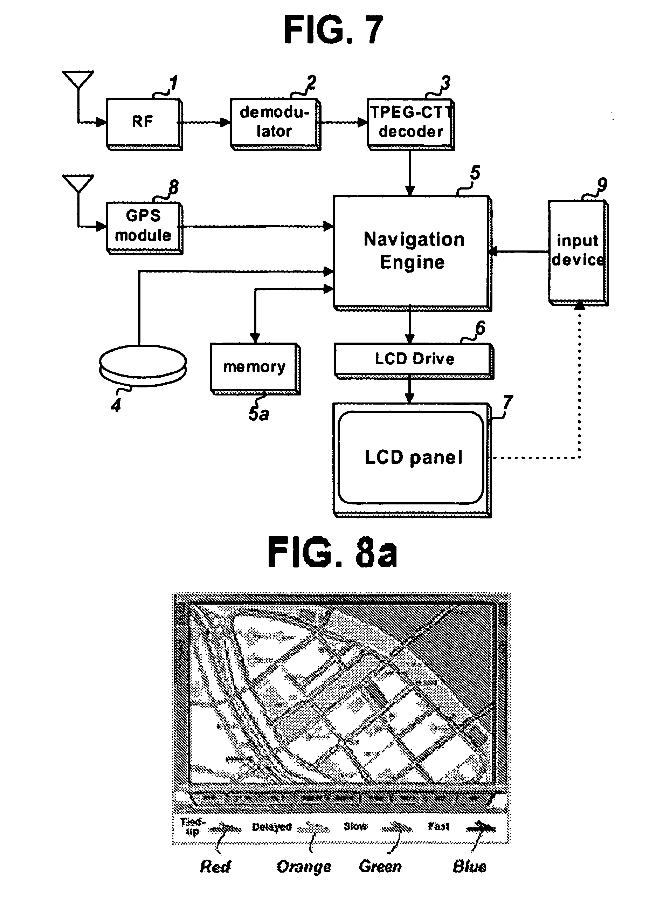

Fig. 7 is an exemplary block diagram of a navigation terminal that receives traffic information transmitted from the server 100. Figs. 7-9b illustrate a system and graphical user interfaces appearing in exemplary implementations of systems for receiving and utilizing traffic information. Other systems may be organized differently or include different components.

The navigation terminal comprises a tuner 1 for receiving modulated traffic information signals by resonating at the required frequency band, a demodulator 2 for outputting traffic information signals by demodulating the modulated signals from the tuner 1, a TPEG-CTT decoder 3 for obtaining traffic information by decoding the demodulated traffic information signals, a GPS module 8 for calculating the current position (i.e., latitude, longitude, and altitude) by receiving signals from a plurality of satellites, storage structure 4 for storing various graphic data and an electronic map including information on links and nodes, an input unit 9 for receiving user input, a navigation engine 5 for controlling screen display based on the user input, the current position, and obtained traffic information, a memory 5a for storing data temporarily, an LCD panel 7 for displaying data, and an LCD drive 6 for driving the LCD panel 7 according to data to be presented. The input unit 9 may be a touch screen incorporated into the LCD panel 7.

The tuner 1 tunes to the frequency of the signals transmitted by the server 100 and the demodulator 2 demodulates the tuned signals in a predetermined manner. The TPEG-CTT decoder 3 decodes the input demodulated signals into a TPEG message sequence as shown in Fig. 2, interprets each TPEG message in the sequence, and then delivers necessary information and/or control signals according to the content of the message to the navigation engine 5. Though various kinds of information are provided for the navigation engine 5 by the TPEG-CTT decoder 3, for purposes of brevity, the following description focuses on the processing procedure thereof.

The TPEG-CTT decoder 3 extracts data/time and message occurrence time included in the message management container of each TPEG-CTT message and determines if the following container is a CTT event container based on 'message element' information (i.e. an identifier). If it is determined that the following container is a CTT event container, the TPEG-CTT decoder 3, by extracting each CTT component and the status component included in the CTT component, provides the navigation engine 5 with the information obtained from the container so that the navigation engine 5 can display congestion and travel time information, which will be describedbelow. Providing the navigation engine 5 with the information may include determining, based on identifiers, that the traffic information includes a message management container including status information within various message components within the message management container. The components may each include different status information associated with different links or locations and identifiers associated with the different status information. The containers and components may each include information associated with a generation time, version number, data length, and identifiers of included information.

The TPEG-CTT decoder 3 then obtains information on the link location about which the previously obtained information is created from the following TPEG-CTT location container. The position information may be, for example, coordinates (i.e., latitudes and longitudes) of the start and end positions or a link ID, depending on the type of the TPEG-CTT location container. If the navigation terminal is equipped with the storage structure 4, the navigation engine 5 finds the link location about which the received information is created with reference to information on each link and node stored in the storage structure 4. The navigation engine 5 may convert the coordinates of the link into the link ID or vice versa.

The navigation engine 5 reads a part of the electronic map centered around the position coordinates received from the GPS module 8 from the storage structure 4 and displays the map on the LCD panel 7 via the LCD drive 6. A particular graphic symbol is displayed at the location corresponding to the current position on the LCD panel 7.

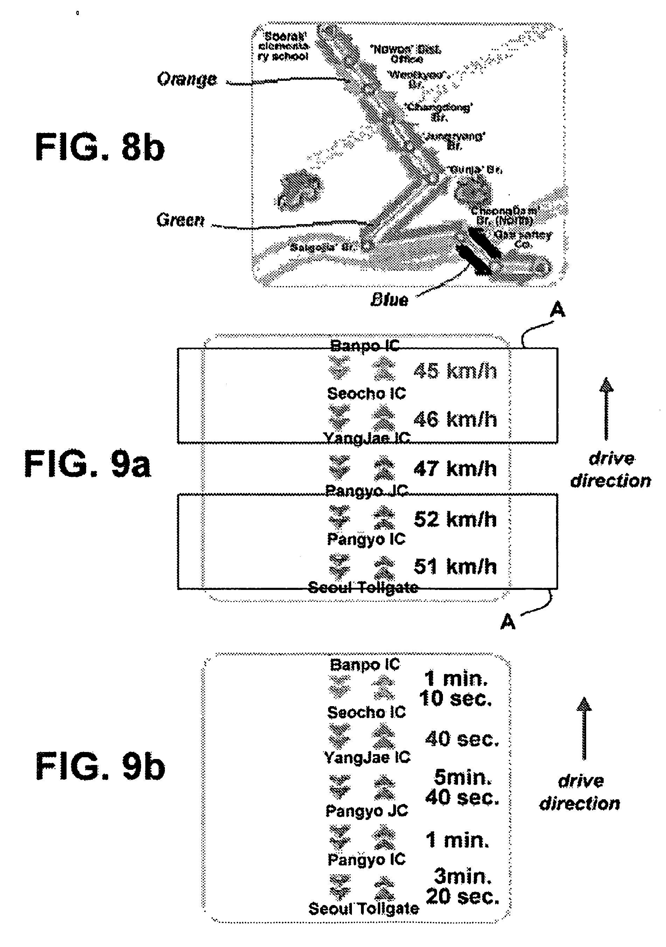

The navigation engine 5 displays the average speed on a link received from the TPEG-CTT decoder 3 at a location corresponding to the coordinates or link ID delivered via the TPEG-CTT location container following the container delivering the average speed information. As shown in Fig. 8a (map-type display) and 8b (graph-type display) , the display method uses different colors according to the average speed on a link. (e.g., red, orange, green, and blue colors indicate average speeds of 0 ∼ 10 km/h, 10 ∼ 20 km/h, 20 ∼ 40 km/h, and over 40 km/h, respectively). If a driver requests the display of the average speeds in the links along a driving route, the navigation engine 5 may show the average speed information corresponding to the links in the front of the current driving route (or the links that belong to a driving route if the route has been predetermined) from among the average speed information received from the TPEG-CTT decoder 3 in the graphic display as shown in Fig. 9a. If a driver requests the display of travel time for the links along a driving route, the navigation engine 5 may show the travel time information corresponding to the links in the front of the current driving route (or the links that belong to a driving route if the route has been predetermined) from among the travel time information of the links received from the TPEG-CTT decoder 3 in the graphic display as shown in Fig. 9b.

Fig. 9a illustrates an example when average speed on a link is delivered with a resolution finer than 1.8 km/h (e.g., the implementations of Figs. 5a through 5c), the average speed is displayed on the LCD panel 7 by the value included in the corresponding field according to the predetermined resolution (1 km/h in Fig. 5b) . Since the resolution is 1 km/h, difference in the average speedbetween two neighboring links is expressed in 1 km/h resolution (the area marked with 'A') or a multiple of the resolution. If average speed information expressed in another predetermined resolution (0.9 km/h in Fig. 5a or 0.5 km/h and 1 km/h in Fig. 5c) is received, the average speed is obtained by multiplying the received information by the predetermined resolution and difference in the average speed between two neighboring links becomes a multiple of the resolution.

Fig. 9b illustrates an example when travel time for a link is provided along with information expressed in units of seconds (e.g., implementations of Figs. 6a through 6e), the information in units of seconds is also displayed on the LCD panel 7. If time information expressed only in units of seconds is received, the received travel time for the link may be converted to the format of units of minutes: units of seconds when needed.

The average speed or travel time for the link may be displayed on the map such as shown in Fig. 8a along a forward direction or at predetermined links.

In the implementations of Figs. 5a and 5c, even though the average speed on a link may show a difference below 1 km/h, since the numeric value of the average speed is displayed separately on the screen, a driver, based on the displayed information or on the travel time which is the length of the corresponding link divided by the average speed including the same resolution, may choose a link to drive through.

According to one implementation for a simplified display, according to the user's choice, average speed on a linkmaybe displayed after throwing away the place values below decimal point. Similarly, as to travel time, only the element in minute may be kept and displayed, the element in second being discarded.

Since the travel time for a link within a decoded status component (ID=01) may have information expressed in units of seconds when the TPEG-CTT decoder 3 delivers the travel time to the navigation engine 5, the TPEG-CTT decoder 3 may deliver two-byte information to the navigation engine 5 either by allocating one byte to each of minute and second or by converting the travel time to seconds. (When 16 bit information expressed in units of seconds is received, the information is delivered as received.) Therefore, when the server 100 also provides travel time for a link as the information expressed in units of seconds (e.g., the implementations of Figs. 6a through 6e) , the TPEG-CTT decoder 3 enables the navigation engine 5 to express the travel time for the link down to seconds; when an automated path finding function is provided, the TPEG-CTT decoder 3 enables the navigation engine 5 to find the shortest path by using the travel time for the links including the resolution in second.

If the terminal in Fig. 7 is equipped with a voice output means, the terminal may output received average speed information or travel time for a specified link or links included in a driving route in voice.

The foregoing description has been presented for purposes of illustration. Thus, various implementations with improvements, modifications, substitutions, or additions within the scope as defined by the following appended claims.

## Claims

1. A method for processing traffic data, the method comprising:
receiving the traffic data including information corresponding to an average travel speed for a road from a first location to a second location, location information corresponding to the road from the first location to the second location, information corresponding to a message management structure (21) including information corresponding to a generation time of a message component structure, and a language code which is indicative of language used for additional information of the traffic data, wherein each message component structure further comprises an identifier specific to the type of information in the message component structure; and
decoding the received traffic data.

2. The method of claim 1, further comprising displaying a particular link of the road in different color according to the average travel speed.

3. The method of claim 1, further comprising displaying the average travel speed in number at a particular link of the road.

4. The method according to any of the preceding claims, wherein the generation time included within the received message management structure relates to a plurality of message component structures that correspond to more than one of a traffic tendency, a predicted or current amount of traffic, a predicted or current speed, or a predicted or current time to traverse a particular link of the road.

5. An apparatus for processing traffic data, the apparatus comprising:
a receiving unit (1, 2) configured to receive the traffic data including information corresponding to an average travel speed for a road from a first location to a second location , location information corresponding to the road from the first location to the second location , information corresponding to a message management structure (21) including information corresponding to a generation time of a message component structure, and a language code which is indicative of language used for additional information of the traffic data, wherein each message component structure further comprises an identifier specific to the type of information in the message component structure; and
a decoding unit (3) configured to decode the received traffic data.

6. The apparatus of claim 5, further comprising a GPS module (8) configured to calculate a current position;
a display unit (7) configured to display information corresponding to the traffic data; and
a navigation engine (5) configured to control a screen display.

7. The apparatus of claim 5 or claim 6, wherein the display unit is configured to display a particular link of the road in different color according to the average travel speed.

8. The apparatus of claim 5 or claim 6, wherein the display unit is configured to display the average travel speed in number at a particular link of the road.

9. The apparatus according to any one of claims 5 to 8, wherein the generation time included within the received message management structure relates to a plurality of message component structures that correspond to more than one of a traffic tendency, a predicted or current amount of traffic, a predicted or current speed, or a predicted or current time to traverse a particular link of a road.

10. A method for processing traffic data, the method comprising:
encoding the traffic data including information corresponding to an average travel speed for a road from a first location to a second location , location information corresponding to the road from the first location to the second location, information corresponding to a message management structure (21) including information corresponding to a generation time of a message component structure, and a language code which is indicative of language used for additional information of the traffic data, wherein each message component structure further comprises an identifier specific to the type of information in the message component structure; and
transmitting the encoded traffic data.

11. The method of claim 10, further comprising displaying a particular link of the road in different color according to the average travel speed.

12. The method of claim 10, further comprising displaying the average travel speed in number at a particular link of the road.

13. The method according to any one of claims 10 to 12, wherein the generation time included within the received message management structure relates to a plurality of message component structures that correspond to more than one of a traffic tendency, a predicted or current amount of traffic, a predicted or current speed, or a predicted or current time to traverse a particular link of the road.

14. An apparatus for processing traffic data, the apparatus comprising:
an encoding unit configured to encode the traffic data including information corresponding to an average travel speed for a road from a first location to a second location, location information corresponding to the road from the first location to the second location, information corresponding to a message management structure (21) including information corresponding to a generation time of a message component structure, and a language code which is indicative of language used for additional information of the traffic data, wherein each message component structure further comprises an identifier specific to the type of information in the message component structure; and
a transmitting unit configured to transmit the encoded traffic data.

## Patentansprüche

1. Verfahren zur Verarbeitung von Verkehrsdaten, wobei das Verfahren aufweist:
Empfangen der Verkehrsdaten mit Informationen in Entsprechung zu einer mittleren Fahrgeschwindigkeit für eine Straße von einem ersten Ort zu einem zweiten Ort, Ortinformationen in Entsprechung zur Straße vom ersten Ort zum zweiten Ort, Informationen in Entsprechung zu einer Nachrichtenmanagementstruktur (21) mit Informationen in Entsprechung zu einer Erzeugungszeit einer Nachrichtenkomponentenstruktur sowie einem Sprachcode, der die verwendete für Zusatzinformationen der Verkehrsdaten Sprache angibt, wobei jede Nachrichtenkomponentenstruktur ferner eine Kennung aufweist, die für die Art von Informationen in der Nachrichtenkomponentenstruktur spezifisch ist; und
Decodieren der empfangenen Verkehrsdaten.

2. Verfahren nach Anspruch 1, ferner mit Anzeigen eines speziellen Streckenabschnitts der Straße in unterschiedlicher Farbe gemäß der mittleren Fahrgeschwindigkeit.

3. Verfahren nach Anspruch 1, ferner mit zahlenmäßigem Anzeigen der mittleren Fahrgeschwindigkeit an einem speziellen Streckenabschnitt der Straße.

4. Verfahren nach einem der vorstehenden Ansprüche, wobei die Erzeugungszeit, die zur empfangenen Nachrichtenmanagementstruktur gehört, mehrere Nachrichtenkomponentenstrukturen betrifft, die mehr als einem Element aus Verkehrstrend, vorhergesagtem oder aktuellem Verkehrsaufkommen, vorhergesagter oder aktueller Geschwindigkeit oder vorhergesagter oder aktueller Zeit zum Zurücklegen eines speziellen Streckenabschnitts der Straße entsprechen.

5. Vorrichtung zur Verarbeitung von Verkehrsdaten, wobei die Vorrichtung aufweist:
eine Empfangseinheit (1, 2), die so konfiguriert ist, daß sie die Verkehrsdaten mit Informationen in Entsprechung zu einer mittleren Fahrgeschwindigkeit für eine Straße von einem ersten Ort zu einem zweiten Ort, Ortinformationen in Entsprechung zur Straße vom ersten Ort zum zweiten Ort, Informationen in Entsprechung zu einer Nachrichtenmanagementstruktur (21) mit Informationen in Entsprechung zu einer Erzeugungszeit einer Nachrichtenkomponentenstruktur sowie einem Sprachcode, der die für Zusatzinformationen der Verkehrsdaten verwendete Sprache angibt, empfängt, wobei jede Nachrichtenkomponentenstruktur ferner eine Kennung aufweist, die für die Art von Informationen in der Nachrichtenkomponentenstruktur spezifisch ist; und
eine Decodiereinheit (3), die so konfiguriert ist, daß sie die empfangenen Verkehrsdaten decodiert.

6. Vorrichtung nach Anspruch 5, ferner mit einem GPS-Modul (8), das so konfiguriert ist, daß es eine aktuelle Position berechnet;
einer Anzeigeeinheit (7), die so konfiguriert ist, daß sie Informationen in Entsprechung zu den Verkehrsdaten anzeigt; und
einer Navigationsmaschine (5), die so konfiguriert ist, daß sie eine Bildschirmanzeige steuert.

7. Vorrichtung nach Anspruch 5 oder Anspruch 6, wobei die Anzeigeeinheit so konfiguriert ist, daß sie einen speziellen Streckenabschnitt der Straße in unterschiedlicher Farbe gemäß der mittleren Fahrgeschwindigkeit anzeigt.

8. Vorrichtung nach Anspruch 5 oder Anspruch 6, wobei die Anzeigeeinheit so konfiguriert ist, daß sie die mittlere Fahrgeschwindigkeit an einem speziellen Streckenabschnitt der Straße zahlenmäßig anzeigt.

9. Vorrichtung nach einem der Ansprüche 5 bis 8, wobei die Erzeugungszeit, die zur empfangenen Nachrichtenmanagementstruktur gehört, mehrere Nachrichtenkomponentenstrukturen betrifft, die mehr als einem Element aus Verkehrstrend, vorhergesagtem oder aktuellem Verkehrsaufkommen, vorhergesagter oder aktueller Geschwindigkeit oder vorhergesagter oder aktueller Zeit zum Zurücklegen eines speziellen Streckenabschnitts einer Straße entsprechen.

10. Verfahren zur Verarbeitung von Verkehrsdaten, wobei das Verfahren aufweist:
Codieren der Verkehrsdaten mit Informationen in Entsprechung zu einer mittleren Fahrgeschwindigkeit für eine Straße von einem ersten Ort zu einem zweiten Ort, Ortinformationen in Entsprechung zur Straße vom ersten Ort zum zweiten Ort, Informationen in Entsprechung zu einer Nachrichtenmanagementstruktur (21) mit Informationen in Entsprechung zu einer Erzeugungszeit einer Nachrichtenkomponentenstruktur sowie einem Sprachcode, der die für Zusatzinformationen der Verkehrsdaten verwendete Sprache angibt, wobei jede Nachrichtenkomponentenstruktur ferner eine Kennung aufweist, die für die Art von Informationen in der Nachrichtenkomponentenstruktur spezifisch ist; und
Senden der codierten Verkehrsdaten.

11. Verfahren nach Anspruch 10, ferner mit Anzeigen eines speziellen Streckenabschnitts der Straße in unterschiedlicher Farbe gemäß der mittleren Fahrgeschwindigkeit.

12. Verfahren nach Anspruch 10, ferner mit zahlenmäßigem Anzeigen der mittleren Fahrgeschwindigkeit an einem speziellen Streckenabschnitt der Straße.

13. Verfahren nach einem der Ansprüche 10 bis 12, wobei die Erzeugungszeit, die zur empfangenen Nachrichtenmanagementstruktur gehört, mehrere Nachrichtenkomponentenstrukturen betrifft, die mehr als einem Element aus Verkehrstrend, vorhergesagtem oder aktuellem Verkehrsaufkommen, vorhergesagter oder aktueller Geschwindigkeit oder vorhergesagter oder aktueller Zeit zum Zurücklegen eines speziellen Streckenabschnitts der Straße entsprechen.

14. Vorrichtung zur Verarbeitung von Verkehrsdaten, wobei die Vorrichtung aufweist:
eine Codiereinheit, die so konfiguriert ist, daß sie die Verkehrsdaten mit Informationen in Entsprechung zu einer mittleren Fahrgeschwindigkeit für eine Straße von einem ersten Ort zu einem zweiten Ort, Ortinformationen in Entsprechung zur Straße vom ersten Ort zum zweiten Ort, Informationen in Entsprechung zu einer Nachrichtenmanagementstruktur (21) mit Informationen in Entsprechung zu einer Erzeugungszeit einer Nachrichtenkomponentenstruktur sowie einem Sprachcode, der die für Zusatzinformationen der Verkehrsdaten verwendete Sprache angibt, codiert, wobei jede Nachrichtenkomponentenstruktur ferner eine Kennung aufweist, die für die Art von Informationen in der Nachrichtenkomponentenstruktur spezifisch ist; und
eine Sendeeinheit, die so konfiguriert ist, daß sie die codierten Verkehrsdaten sendet.

## Revendications

1. Procédé de traitement de données de trafic, le procédé comprenant les étapes consistant à :
recevoir les données de trafic comprenant des informations correspondant à une vitesse de déplacement moyenne pour une route d'un premier lieu à un second lieu, des informations de localisation correspondant à la route du premier lieu au second lieu, des informations correspondant à une structure de gestion de message (21) comprenant des informations correspondant à un temps de génération d'une structure de composant de message, et un code de langue qui est indicatif de la langue utilisée pour des informations supplémentaires des données de trafic, dans lequel chaque structure de composant de message comprend en outre un identifiant spécifique au type d'informations dans la structure de composant de message ; et
décoder les données de trafic reçues.

2. Procédé selon la revendication 1, comprenant en outre l'étape consistant à afficher un tronçon particulier de la route dans une couleur différente selon la vitesse de déplacement moyenne.

3. Procédé selon la revendication 1, comprenant en outre l'étape consistant à afficher la vitesse de déplacement moyenne en nombre au niveau d'un tronçon particulier de la route.

4. Procédé selon une quelconque des revendications précédentes, dans lequel le temps de génération inclus à l'intérieur de la structure de gestion de message reçue concerne une pluralité de structures de gestion de message qui correspondent à plus d'un élément parmi une tendance de trafic, une quantité prédite ou actuelle de trafic, une vitesse prédite ou actuelle, ou un temps prédit ou actuel pour traverser un tronçon particulier de la route.

5. Appareil destiné à traiter des données de trafic, l'appareil comprenant :
une unité de réception (1, 2) configurée pour recevoir les données de trafic comprenant des informations correspondant à une vitesse de déplacement moyenne pour une route d'un premier lieu à un second lieu, des informations de localisation correspondant à la route du premier lieu au second lieu, des informations correspondant à une structure de gestion de message (21) comprenant des informations correspondant à un temps de génération d'une structure de composant de message, et un code de langue qui est indicatif de la langue utilisée pour des informations supplémentaires des données de trafic, dans lequel chaque structure de composant de message comprend en outre un identifiant spécifique au type d'informations dans la structure de composant de message ; et
une unité de décodage (3) configurée pour décoder les données de trafic reçues.

6. Appareil selon la revendication 5, comprenant en outre un module GPS (8) configuré pour calculer une position actuelle ;
une unité d'affichage (7) configurée pour afficher des informations correspondant aux données de trafic ; et
un moteur de navigation (5) configuré pour commander un affichage d'écran.

7. Appareil selon la revendication 5 ou la revendication 6, dans lequel l'unité d'affichage est configurée pour afficher un tronçon particulier de la route dans une couleur différente selon la vitesse de déplacement moyenne.

8. Appareil selon la revendication 5 ou la revendication 6, dans lequel l'unité d'affichage est configurée pour afficher la vitesse de déplacement moyenne en nombre au niveau d'un tronçon particulier de la route.

9. Appareil selon une quelconque des revendications 5 à 8, dans lequel le temps de génération inclus à l'intérieur de la structure de gestion de message reçue concerne une pluralité de structures de gestion de message qui correspondent à plus d'un élément parmi une tendance de trafic, une quantité prédite ou actuelle de trafic, une vitesse prédite ou actuelle, ou un temps prédit ou actuel pour traverser un tronçon particulier d'une route.

10. Procédé de traitement de données de trafic, le procédé comprenant les étapes consistant à :
encoder les données de trafic comprenant des informations correspondant à une vitesse de déplacement moyenne pour une route d'un premier lieu à un second lieu, des informations de localisation correspondant à la route du premier lieu au second lieu, des informations correspondant à une structure de gestion de message (21) comprenant des informations correspondant à un temps de génération d'une structure de composant de message, et un code de langue qui est indicatif de la langue utilisée pour des informations supplémentaires des données de trafic, dans lequel chaque structure de composant de message comprend en outre un identifiant spécifique au type d'informations dans la structure de composant de message ; et
transmettre les données de trafic encodées.

11. Procédé selon la revendication 10, comprenant en outre l'étape consistant à afficher un tronçon particulier de la route dans une couleur différente selon la vitesse de déplacement moyenne.

12. Procédé selon la revendication 10, comprenant en outre l'étape consistant à afficher la vitesse de déplacement moyenne en nombre au niveau d'un tronçon particulier de la route.

13. Procédé selon une quelconque des revendications 10 à 12, dans lequel le temps de génération inclus à l'intérieur de la structure de gestion de message reçue concerne une pluralité de structures de gestion de message qui correspondent à plus d'un élément parmi une tendance de trafic, une quantité prédite ou actuelle de trafic, une vitesse prédite ou actuelle, ou un temps prédit ou actuel pour traverser un tronçon particulier de la route.

14. Appareil destiné à traiter données de trafic, l'appareil comprenant :
une unité d'encodage configurée pour encoder les données de trafic comprenant des informations correspondant à une vitesse de déplacement moyenne pour une route d'un premier emplacement à un second emplacement, des informations d'emplacement correspondant à la route du premier emplacement au second emplacement, des informations correspondant à une structure de gestion de message (21) comprenant des informations correspondant à un temps de génération d'une structure de composant de message, et un code de langue qui est indicatif de la langue utilisée pour des informations supplémentaires des données de trafic, dans lequel chaque structure de composant de message comprend en outre un identifiant spécifique au type d'informations dans la structure de composant de message ; et une unité de transmission configurée pour transmettre les données de trafic encodées.
